# EUROPEAN PATENT APPLICATION

(11) **EP 1 271 805 A1**
(43) Date of publication of application: **02.01.2003**
(21) Application number: 02251578.7
(22) Date of filing: 06.03.2002
(51) Int. Cl.: H04B 10/10

(54) **Method and apparatus for the correction of optical signal wave front distortion within a free-space optical communication system**

(30) Priority: 29.06.2001 US 896805
(71) Applicant: LUCENT TECHNOLOGIES INC., Murray Hill, New Jersey 07974-0636 (US)
(72) Inventor: Presby, Herman M., Highland Park, New Jersey 08904 (US); Tyson, John A., Pottersville, New Jersey 07979 (US)
(74) Representative: Watts, Christopher Malcolm Kelway, Dr.

(57) **Abstract**

A free space optical communication system is disclosed whereby the optics of a receive telescope are manipulated using adaptive optics to compensate for wave front distortion of a light beam transmitted by a transmit telescope. Wave front distortion is manifested at the receive telescope as a deviation from the normal, orthogonal orientation of the wave front of the transmitted light beam relative to its line of travel. This deviation may be detected, for example, by a wave front sensor, such as a Shack-Hartman sensor, which identifies the slope, or beam tilt, of discrete sections of the transmitted beam. The optics of the receive telescope can then be deformed in such a way as to cancel the wave front distortion and correspondingly reduce the resulting distortion of the received signal.

## Description

### Field of the Invention

The present invention is related generally to data communication systems and, in particular, to free-space optical data communication systems.

### Background of the Invention

Telecommunication systems that connect two or more sites with physical wire or cable are generally limited to relatively low-speed, low-capacity applications. Laying the cable for such systems is also expensive and may be difficult, especially in congested metropolitan areas where installation options are limited. In order to address these limitations, recently developed systems utilize the free-space transmission of one or more light beams modulated with data to transmit the data from one point to another. Even in the case where a physical, hard-wired connection between two networks exists, a free-space system using such beams provides a higher-speed and higher-capacity link, presently up to 10 Gbps, between these networks. When two networks are not already physically linked via wire, free-space communication avoids the communication system infrastructure cost of laying cable to connect one site in the system to another. Instead of cables, free-space optical communications systems comprise, in part, at least one transmit telescope and at least one receive telescope for sending and receiving information, respectively, between two or more communications sites.

The operation of free-space optical communications may be hampered by a variety of factors, however. For example, distortion of the wave front of the transmitted light beam may occur due to turbulence, attenuation, or other phenomena. This distortion may result in a phenomenon known as "beam tilt" wherein different discrete sections of the wave front of the beam deviate from their transmitted, orthogonal orientation to the line of travel of the beam. At the receive telescope, the result of such beam tilt is the movement of the image of the received beam on the focal plane of the receive telescope. Beam intensity fluctuation, also known as scintillation, may also occur. Either of these phenomena may result in significant degradation or total loss of communications.

### Summary of the Invention:

The aforementioned problems related to wave front distortion are ameliorated by the present invention. In accordance with the present invention, the optics of the receive telescope are manipulated using adaptive optics to compensate for at least some of that distortion. The term "adaptive optics," as used herein, means an optical system in which at least one optical parameter is varied as a function of a control signal, such as a signal indicative of phenomena that distort the wave front of the transmitted signal. An example of optics suited for use in such a system, and used in the illustrative embodiment disclosed herein, is the deformable mirror described in the co-pending patent application titled "Telescope For A Free-Space Wireless Optical Communication System," having Serial No. 09/679159. Wave front distortion is manifested at the receive telescope as a deviation from the normal, orthogonal orientation of the wave front of the transmitted light beam relative to its line of travel. This deviation may be detected, for example, by a wave front sensor, such as a Shack-Hartman sensor, which identifies the slope, or beam tilt, of discrete sections of the transmitted beam. The optics of the receive telescope can then be deformed in such a way as to cancel the wave front distortion and correspondingly reduce the resulting distortion of the received signal.

The use of adaptive optics in a receive telescope to correct for distorted signals is well known in astronomy, for example. However, there are key differences between the use of adaptive optics in astronomy and the use of adaptive optics in telecommunications, per the present invention. These differences are such as to lead those in the art from considering the use of adaptive optics for telecommunications applications. For example, telescopes used in telecommunications tend to be of much smaller aperture than those used in astronomy. Thus, a given deformation of a given magnitude on the telecommunications telescope would have a much greater effect on the signal characteristics than would the same deformation on an astronomical telescope. As a result, correction of such deformations requires a much wider range of dynamic control of the optics of telecommunications telescopes than for telescopes in astronomical uses. Additionally, the distances over which the communications beam travel are much smaller than the distances over which an astronomical beam of light travels. However, whereas astronomical light beams travel essentially perpendicular relative to stratified atmospheric distortion, a communications beam as used in the present invention is nearly tangent to those layers. The distortion is therefore of a different nature than that encountered in astronomy. Specifically, beams used in communications are exposed to a qualitatively different power spectrum of wave front distortions than are astronomical light beams. Thus, the desirability of using adaptive optics to correct for this distortion has not been apparent.

Finally, one can vary the characteristics of transmitted signals in telecommunications in a way that, obviously, is impossible in astronomical uses. Thus, most prior art efforts to minimize effects of distortion in telecommunications systems have focused on actively manipulating the transmitted signal by, for example, increasing or decreasing its amplitude. Therefore, while the concept of adaptive optics in recent telescopes is well known, it remained for the present applicants to realize the utility and applicability of adaptive optics to the telecommunications realm.

### Brief Description of the Drawing

FIG. 1 shows an optical communication system using a prior art telescope apparatus during normal communications conditions;
FIG. 2 shows an optical communication system using a prior art telescope apparatus wherein atmospheric turbulence causes wave front distortion of a transmitted beam;
FIG. 3 shows a receive telescope in the system of the present invention that is capable of being deformed using adaptive optics to compensate for atmospheric turbulence;
FIG. 4 shows an optical communication system utilizing adaptive optics in accordance with the principles of the present invention to compensate for wave front distortion of the received beam;
FIG. 5 shows a Shack-Hartman sensor that is capable of determining the slope of discrete sections of the wave front of the received beam to determine the effects of atmospheric turbulence on the beam;
FIG. 6A shows a cross-section of a charge-coupled device utilized in the sensor of FIG. 5 and the images produced thereupon when there is no atmospheric turbulence;
FIG. 6B shows a cross-section of a charge coupled device utilized in the sensor of FIG. 5 and the images produced thereupon when atmospheric turbulence is present; and
FIG. 7 shows a flow chart depicting illustrative steps of the operation of the system of FIG. 4.

### Detailed Description of the Invention

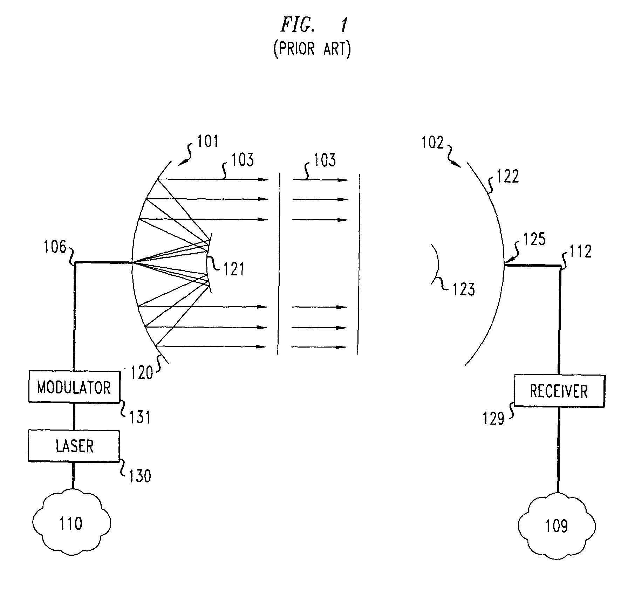

FIG. 1 shows two prior art optical communication telescopes, 101 and 102, during normal aligned operating conditions in a free-space optical communications system. Laser 130 produces a light beam that is modulated by modulator 131 with data received from network 110 and transmitted on optical fiber 106. The transmit telescope 101 receives the modulated optical signal via optical fiber 106. Primary mirror 120 and secondary mirror 121 of telescope 101 optically shape and transmit the modulated light beam such that the beam is incident upon the focal plane 125 of receive telescope 102. Receive telescope 102 utilizes its optics, including a primary mirror 122 and a secondary mirror 123, to focus the incident transmitted modulated light beam 103 onto the receive optical fiber 112 at the focal plane 125. Receiver 129 receives the modulated optical signal from the receive optical fiber and converts it to an electrical signal, demodulates the data, and forwards the data to network 109. It should be noted that receive telescope 102 may be made capable of transmitting a light beam by incorporating a laser and a modulator similar to laser 130 and modulator 131. Likewise, the transmit telescope 101 may be made capable of receiving by incorporating a receiver into the electronics of that telescope, similar to receiver 129. Thus, both telescopes of the system would be capable of transmitting and receiving. Such a dual-use capability of transmitting and receiving is intended to apply to all telescopes described in the embodiments of the present invention disclosed hereinafter.

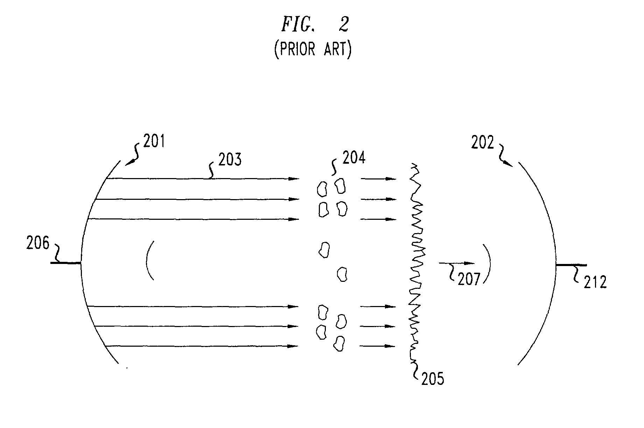

In certain situations, the wave front of the light beam transmitted by a transmitting telescope may be distorted when it arrives at the focal plane of the receive telescope, resulting in a correspondingly distorted communications signal. As shown in FIG. 2, such distortion may occur due to atmospheric turbulence, such as small-cell turbulence 204, anywhere along the path between telescopes 201 and 202, that causes portions of the wave front of the transmitted beam 203 to refract and thus deviate from the direct path between the transmit and receive telescopes. When this occurs, discrete portions of wave front 205 become non-orthogonal to the line of travel 207 of the wave front. The result is that certain portions of the wave front will arrive at the receive telescope at different times than others and may arrive at different angles relative to the line of travel of the beam 207. Thus, the apparent position of the transmit telescope will change relative to the receive telescope, which changes the location of discrete portions of the image of the received beam on the focal plane of the receive telescope. The image on the focal plane of the receive telescope may also vary in intensity over time resulting in variations in the received power of discrete portions of the received beam. This can significantly degrade communications between the two telescopes.

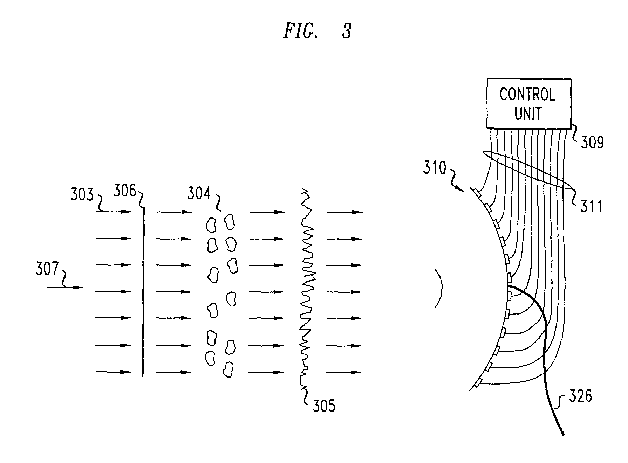

FIG. 3 shows one embodiment of the present invention that addresses the aforementioned degradation by measuring, for example, the effects of turbulence in the atmosphere on the beam's wave front and compensating for that turbulence at the receive telescope. In that embodiment, the wave front 306 of beam 303 is undistorted and is orthogonal to the line of travel 307 of the beam. Upon passing through turbulence 304, however, wave front distortion results, as exemplified by wave front 305. When received by receive telescope 302, this distortion is measured, as described below, and the locations on the primary mirror of the receive telescope that must be deformed are identified, as well as the magnitude and direction of that deformation. Control unit 309 of the receive telescope 302 then varies the individual voltages to electrodes 310 located at or near the surface of primary mirror 325 via leads 311. By applying a voltage difference between the mirror 325 and the electrodes 310, an electrostatic attractive or repelling force is produced between each electrode and a portion of the mirror near that electrode, causing the mirror to be deformed. The use of such deformable mirrors in free-space laser communications systems is the subject of the above-cited copending application. Varying the voltages on the electrodes 310 enables the extent of the deformation of mirror 325 to be controlled. The result is that the distortion of beam 303 with a received wave front 305 is compensated for in a way such that the image of the beam incident upon receive optical fiber 326 is substantially undistorted and is the image of a beam that is orthogonal to the line of travel 307 of the beam.

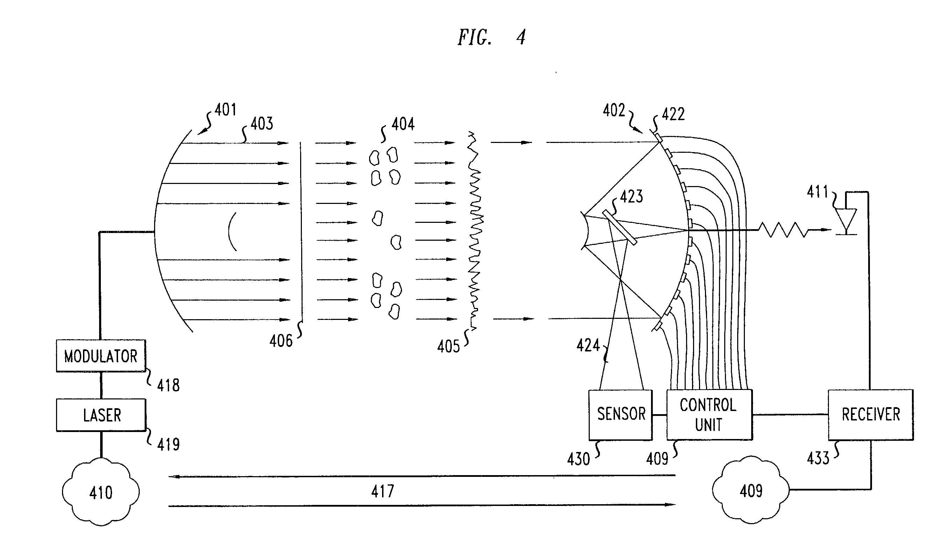

FIG. 4 shows a free-space telecommunications system incorporating the embodiment of the present invention of FIG. 3 that utilizes adaptive optics, as described above, to compensate for disturbances that cause the aforementioned distortion. In that system, laser 419 produces a light beam that is modulated by modulator 418 with data from network 410. This modulated light beam is then transmitted to telescope 401 which shapes the beam 403 so that it is incident on the focal plane of receive telescope 402. Photodetector 411 detects the incoming light energy, converts it to an electrical signal, and forwards it to receiver 433, which demodulates the signal. The demodulated data is then forwarded to the intended destination within network 409.

When signal 403 is transmitted from transmit telescope 401, the wave front 406 of that signal is undistorted and all sections of the wave front are substantially orthogonal to the line of travel. However, when atmospheric turbulence 404 is present along the path of signal 403, wave front 406 may become distorted with portions not orthogonal to the line of travel, as exemplified by wave front 405.

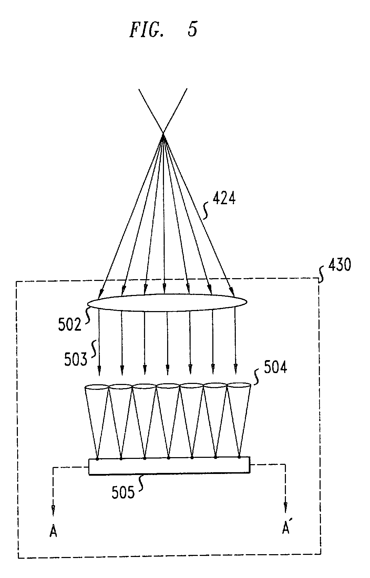

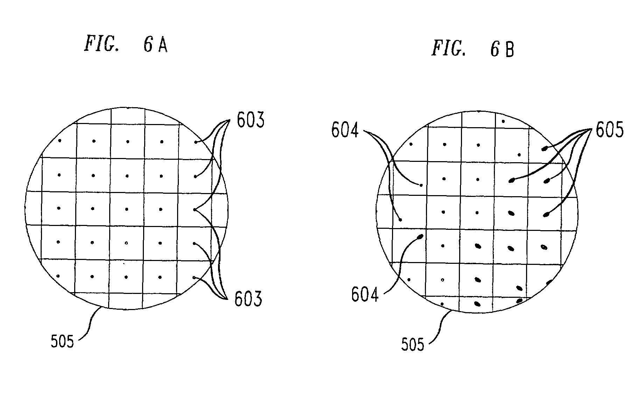

When signal 403 reaches the receive telescope 402, beam-splitter 423 splits signal 403 in a way such that signal 424 is incident upon sensor 430, here exemplified by a Shack-Hartman sensor. Sensor 430 receives the light beam, detects the arrival of the wave front 405 and determines whether effects of distortion of the signal 403, such as that caused by turbulence 404, are present. The Shack-Hartman sensor, which is well known in the art, utilizes an array of lenses orthogonal to the transmission path of the beam to isolate discrete sections of the potentially-distorted wave front 405 and focus images of those discrete sections onto a charge-coupled device. The sensor then measures the magnitude and direction of the displacement, if any, of each of those images relative to its nominal, calibrated position, i.e., the position of the image if there was no distortion of the wave front. The displacement of each image relative to its nominal, calibrated position is directly proportional to the phase deviation of a corresponding discrete area of the wave front of the received beam. Referring to FIG. 5, depicting a Shack-Hartman sensor, the communications beam, 403 in FIG. 4, is split such that the beam is incident upon the focal plane of the receive telescope and, at the same time, split beam 424 is incident upon lens 502 of the Shack-Hartman sensor. Lens 502 refracts beam 424 in such a way that it causes a portion of a parallel light beam to be incident upon each of the lenses 504. Lenses 504 focus separate images of segments of the beam onto a charge-coupled device (CCD) 505. FIG. 6A and FIG. 6B are representations of the cross section A-A' of CCD 505 in FIG. 5. In the case where no turbulence is present in the atmosphere, the images 602 of each portion of the beam will be focused on nominal, calibrated positions on the CCD 505. However, when turbulence 404 in FIG. 4 is present it will distort the orthogonal, planar wave front 406, resulting in wave front 405. In this case, the sensor will detect images 604 on CCD 505 that are displaced from those nominal, calibrated positions. The images of the discrete portions of the beam may also be blurred, as represented by images 605. The displacement of the image relative to its nominal, calibrated focus point is proportional to the phase deviation of discrete sections of the wave front. By calculating each of these deviations, it is then possible to determine the shape of the entire wave front.

Referring once again to FIG. 4, using the aforementioned phase deviation information, the present invention corrects for atmospheric turbulence 404 by varying the shape of the primary mirror 422 of the receive telescope 402 to compensate for the phase deviations caused by turbulence. The result is that the image of wave front 405 on the focal plane of the receive telescope 422 will be an image of an undistorted wave front.
In order to achieve the aforementioned deformation, control unit 409 receives the phase deviation data from Shack-Hartman sensor 430 and deforms the primary mirror of the receive telescope 402 accordingly. To do this, control unit 409 applies a voltage to individual electrodes 410 located near the surface of the mirror 422 where deformation is desired. Deformation of the mirror 422 is varied by varying the voltages applied to the electrodes 410. In order to pre-compensate, on an ongoing basis, for distortion of the transmitted signal 403, the wave front 405 of the signal 403 is continuously or periodically monitored by sensor 430 at the receive telescope 402 for changes to the turbulence condition 404.

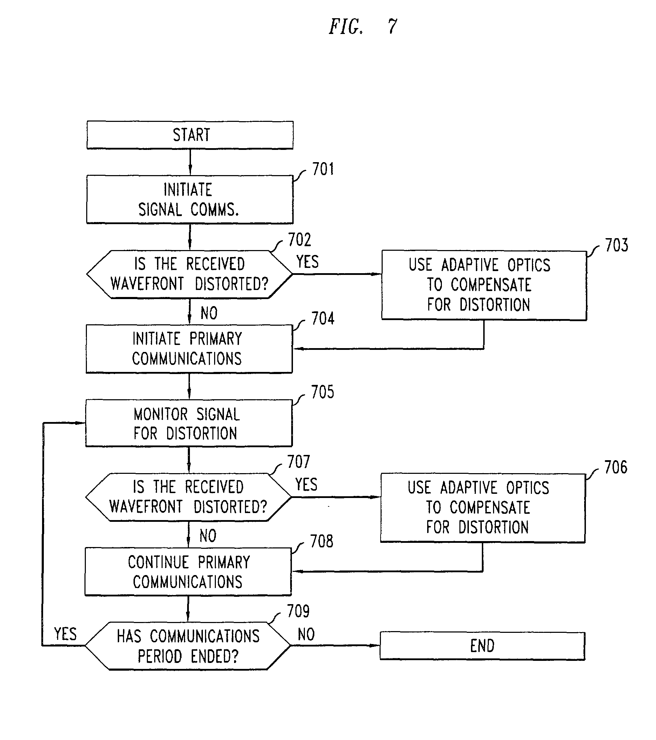

Illustrative steps of the operation of the system of FIG. 4 are shown in FIG 7. An initial communications connectivity signal 403 is generated at step 701 to determine the effects of distortion on the communications signal. If distortion is present, at step 702, then the system determines which discrete locations of the primary mirror of the receive telescope need to be deformed, as well as the magnitude and direction of deformation required at each discrete location on that mirror. At step 703, the primary mirror of the receive telescope is deformed. Once the system has compensated for the distortion, primary communications begin at step 704. While communications are ongoing, the system continually monitors the distortion of the signal, at step 705, for any change that may necessitate changes to the deformation of the primary mirror. At step 707, if additional distortion is detected, the invention once again, at step 706, deforms the primary mirror of the receive telescope to compensate for the distortion. Then, if the system has successfully compensated for the distortion via the use of adaptive optics, primary communications continue at step 708. If the primary communications period has not ended at step 709, then the system continues to monitor the signal, at step 705, for any distortion which may arise and compensate for that distortion as necessary via changing the location and amount of the distortion of the primary mirror of the receive telescope.

The foregoing merely illustrates the principles of the invention. It will thus be appreciated that those skilled in the art will be able to devise various arrangements which, although not explicitly described or shown herein, embody the principles of the invention and are within its scope. Furthermore, all examples and conditional language recited herein are intended expressly to be only for pedagogical purposes to aid the reader in understanding the principles of the invention and are to be construed as being without limitation to such specifically recited examples and conditions. Moreover, all statements herein reciting aspects and embodiments of the invention, as well as specific examples thereof, are intended to encompass functional equivalents thereof.

Diagrams herein represent conceptual views of optical telescopes and light beams modulated with data for the purposes of free-space optical communications. Diagrams of optical components are not necessarily shown to scale but are, instead, merely representative of possible physical arrangements of such components. Optical fibers depicted in the diagrams represent only mechanism for transmitting data between telescopes and network destinations. Any other communication method for passing data from the telescopes to network destinations is intended as an alternative to the method shown in the diagram. Also, while the representative embodiment above uses the example of atmospheric turbulence as a phenomenon that would result in wave-front distortion, such distortion may result from any number of causes. For example, if the light beam passes through any material located in the path of the beam, such as window glass, significant wave front distortion could result. The method and apparatus of the present invention will at least partially correct for any wave front distortion that results for any reason.

Additionally, although the disclosed embodiment uses telescopes 401 and 402 in FIG. 4 for both primary communications purposes as well as for monitoring wave front distortion on the communications signal, a separate reference communications system having separate telescopes located near the primary communications telescopes could be used to obtain the wave front deformation information. Methods of adding such a reference system to the primary communications system will be apparent to those skilled in the art.

Other aspects of the disclosed embodiments of the present invention are also merely illustrative in nature. For instance, while a Shack-Hartman sensor is used to determine the shape of the received wave front in the above-described embodiment, any suitable sensor for determining the effects of wave front distortion may be used. Such sensors are well known in the art of adaptive optics. Additionally, although the embodiment presented utilizes traditional network connections to deliver information to and from the telescopes, wireless methods of communication could alternatively be used. In this case, the communications system could use a different wavelength for the feedback signal to avoid interfering with the primary communications signal. Also, the disclosed embodiment of the present invention electrostatically deforms the primary mirror of the receive telescope by varying the voltages applied to electrodes near the surface of that mirror. However, any mirror of the receive telescopes may be similarly deformed with identical results. Deforming any mirror in the communications system to achieve the same result as in the embodiments of the present invention will be apparent to one skilled in the art. Also, there are many well-known alternatives to the use of electrostatic effects as used herein for deforming discrete sections of the mirrors, such as piezeo-electric drivers or mechanical screws. Any method of deforming any mirror in the communications system is intended to be encompassed by this invention.

Finally, any method of using adaptive optics at the receive telescope to compensate for distortion to the wave front is intended to be encompassed by the present invention. For example, lenses may be used as the functional equivalents to mirrors. Additionally, any use of segmented mirrors to deform the wave front of the communications light beam is the functional equivalent of deforming a single mirror in multiple, discrete locations. Instead of using a single, continuous primary or secondary mirror to deform the wave front of the communications signal, segmented mirrors comprise many small mirrors which are independently movable to achieve the same effect. Any such method, or its functional equivalent, is expressly intended to be encompassed by the present invention disclosed herein.

## Claims

1. Apparatus for use in an optical communications system wherein at least one transmit telescope transmits a light beam carrying data, said apparatus comprising:
a receive telescope adapted to receive said light beam;
means for generating a signal indicative of wave front distortion of said light beam; and
means responsive to said signal for adjusting the optics of the receive telescope in such a way as to compensate for said wave front distortion of said beam.

2. The receive telescope of claim 1 wherein the means for generating comprises a wave front sensor.

3. The receive telescope of claim 1 wherein said receive telescope comprises a plurality of mirrors used to focus an image of the optical beam on a receive focal plane of said telescope.

4. The receive telescope of claim 1 wherein said receive telescope comprises one or more lenses used to focus an image of the optical beam on a focal plane of said receive telescope.

5. The receive telescope of claim 2 wherein the means for adjusting adjusts said optics by deforming at least one surface of the optics of said receive telescope.

6. Apparatus for use in a free space telecommunications system comprising at least one transmit telescope and at least one receive telescope, said apparatus comprising:
means for detecting wave front distortion of an optical signal transmitted from said transmit telescope to said receive telescope; and
means responsive to said detecting means for distorting the optics of said receive telescope in such a way that the image of a wave front of said optical signal on the focal plane of the receive telescope is the image of a wave front that is at least partially undistorted and more orthogonal to the line of travel of the beam than it otherwise would be.

7. The apparatus of claim 6 wherein said means for distorting distorts said optics as a function of a signal indicative of said wave front distortion.

8. The apparatus of claim 6 wherein said receive telescope comprises a plurality of mirrors used to focus the optical signal on a focal plane of the receive telescope.

9. The apparatus of claim 7 wherein said signal indicative of said wave front distortion is generated in response to a detection of said distortion at the receive telescope.

10. A method of compensating for wave front distortion in a free-space optical communication system, the method comprising:
receiving a light beam from a transmit telescope;
detecting wave front distortion in said beam; and
deforming the optics of said receive telescope as a function of the detected wave front distortion to produce an image of a wave front that is tile image of a wave front less distorted than it otherwise would be.
